# DEMANDE DE BREVET EUROPEEN

(11) **EP 1 710 730 A2**
(43) Date de publication de la demande: **11.10.2006**
(21) Numéro de dépôt: 06300268.7
(22) Date de dépôt: 23.03.2006
(51) Int. Cl.: G06K 9/00, F17C 13/00, G06Q 10/00

(54) **Méthode de gestion et de traçabilité de bouteilles de gaz**

(30) Priorité: 04.04.2005 FR 0550871
(71) Demandeur: L'Air Liquide Société Anon. à Directoire et Conseil de Surveillance pour l'Etude et l'Exploitation des Procédés Georges Claude, 75007 Paris (FR)
(72) Inventeur: Jouvaud, Dominique, 75015 Paris (FR)
(74) Mandataire: De Cuenca, Emmanuel Jaime

(57) **Abrégé**

L'invention concerne un procédé de gestion d'un parc de bouteilles de gaz (1), chacune desdites bouteilles de gaz étant identifiée par un numéro (10, 11) imprimé ou gravé sur lesdites bouteilles, et comprenant les étapes de prise d'une image dudit numéro à partir de moyens de prise de vue (60), de transmission de ladite image vers un centre de contrôle (70) dudit parc de bouteilles de gaz, de détermination dudit numéro à partir de ladite image, et de reconnaissance de la dite bouteille à partir dudit numéro.

## Description

La présente invention concerne d'une manière générale la gestion d'un parc de bouteilles de gaz, et plus particulièrement une méthode pour la traçabilité de ces bouteilles de gaz.

L'utilisation de gaz industriels conditionnés en bouteille est très répandu dans l'industrie. La gestion des bouteilles de gaz sur les parcs de conditionnement, sur les parcs de distributeurs ou sur les parcs des clients consommateurs de gaz, est aujourd'hui assuré grâce à différents bulletins de livraison. Afin d'automatiser ces gestions, les groupes industriels ont mis au point des techniques basées sur la reconnaissance d'identifiants comme les codes barres ou les puces électroniques. L'information lue à partir des codes barre ou des puces électroniques est transmise à des systèmes de gestion informatique centralisées ou régionalisées, qui permettent d'une part la reconnaissance des bouteilles, et d'autre part une gestion globale du parc, en assurant le suivi et les transferts de ces bouteilles. Au travers de la gestion des bouteilles, on cherche à assurer la traçabilité des produits, c'est-à-dire connaître à tout moment les informations relatives au contenant (la bouteille), et au contenu (le produit) ainsi que tout autre information pouvant intéresser les utilisateurs des bouteilles de gaz. Le problème aujourd'hui avec les identifiants type codes barre ou puces électronique résident dans le fait qu'ils peuvent être échangés, détruits, décollés, voir modifiés ou encore falsifiés. Les puces électroniques restent sensibles aux conditions environnantes, ce qui leur confère une certaine fragilité. Par ailleurs, ce type d'identifiant restent onéreux à installer et à maintenir. Leur pérennité dans le temps est également sujette à caution compte tenu de l'évolution actuelle des technologies qui demandent par ailleurs des investissements extrêmement importants.

Le but de la présente invention est de proposer une méthode de gestion des bouteilles de gaz s'appuyant sur une information pure, c'est-à-dire la plus proche possible de la bouteille sans pour autant nécessité des investissements importants.

A cet effet, l'invention concerne un procédé de gestion d'un parc de bouteilles de gaz, chacune des dites bouteilles de gaz étant identifiées par un numéro imprimé ou gravé sur lesdites bouteilles, et comprenant les étapes de :
a) prise d'une image dudit numéro à partir de moyens de prise de vue,
b) transmission de ladite image vers un centre de contrôle dudit parcs de bouteilles de gaz,
c) reconnaissance de ladite bouteille à partir dudit numéro.

Ainsi, c'est une information fiable et pérenne qui permet la reconnaissance de chaque bouteille du parc. Compte tenu de la durée de vie de chaque bouteille qui peut atteindre jusqu'à soixante ans, cette information est indépendante de l'évolution des techniques de traçabilité connues, comme celle citée précédemment.

Le procédé de gestion peut en outre comporter une ou plusieurs des caractéristiques suivantes, prise isolément ou selon toutes les combinaisons techniquement possibles :
- l'étape c) comprend l'utilisation d'un logiciel de reconnaissance de caractères pour déterminer le numéro imprimé ou gravé sur la bouteille,
- à l'étape d) la reconnaissance comprend une étape de comparaison du numéro déterminé à une base de données de numéros des bouteilles du parc,
- chaque bouteille de gaz est peinte, totalement ou partiellement, avec une couleur fonction du contenu de ladite bouteille, et à l'étape a) l'image est une image en couleur de ladite bouteille et qu'après l'étape c), ladite couleur est identifiée à partir de l'image,
- chaque bouteille comprend un signe distinctif placé sur ladite bouteille après chaque réépreuve périodique réalisée, et caractérisé en ce que, à l'étape a) l'image comprend également ledit signe distinctif et qu'après l'étape c), ledit signe distinctif est identifié,
- les moyens de prise de vue comprennent un caméra optique couleur,
- un identifiant de type puce RFID est prévue sur la bouteille, une unité d'interrogation à distance étant prévue pour interroger ladite puce RFID pour transmettre l'identifiant, ainsi que les autres informations contenues dans ladite puce,
- un identifiant du type code barre est prévue sur la bouteille, les moyens de prise de vue étant apte à lire ledit code barre,
- l'information liée à l'identifiant dans la base de données est comparées à l'information liée au numéro dans ladite base de données,
- la couleur fonction du contenu de la bouteille est comparée au contenu lié au numéro et/ou l'identifiant dans la base de données, et
- la bouteille contient est un gaz comme l'hydrogène, l'oxygène, l'azote, de l'air ou un mélange à base de méthane.

D'autres caractéristiques et avantages ressortiront de la description suivante, donnée uniquement à titre d'exemples, et faites en références aux dessins annexés sur lesquels :
- la figure 1 est une vue schématique d'une bouteille de gaz,
- la figure 2 est une vue schématique d'une installation permettant la reconnaissance de bouteilles de gaz selon l'invention

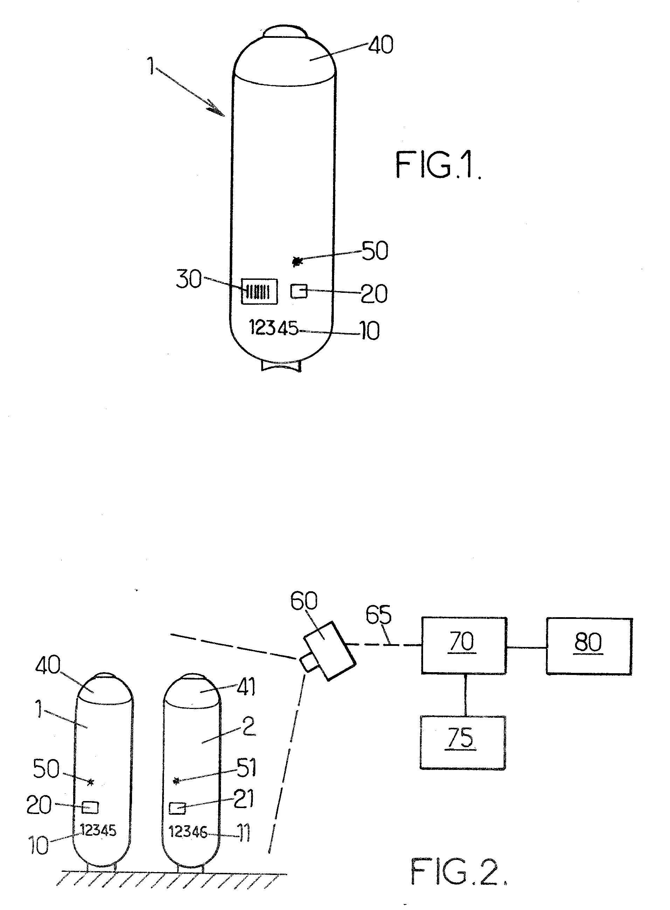

Sur la figure 1 on a représenté une bouteille de gaz 1 typique comprenant différents moyens d'identification. En effet, une bouteille de gaz peut comporter différentes informations comme le nom du propriétaire, un numéro de série, un code de couleur, un signe distinctif correspondant à chaque ré-épreuve de la bouteille, ainsi que d'autres informations. Le numéro de bouteille 10 est imprimé ou préférablement gravé, sur la bouteille de gaz. Les normes actuelles pour la numérotation des bouteilles permettent de garantir avec une forte probabilité que ce numéro est presque toujours unique, ce qui le rend très intéressant pour assurer la traçabilité des bouteilles de gaz. D'autres identifiants sont également utilisés aujourd'hui comme une puce RFID 20 (radio frequency identifyer) sans contact ou un code barre 30. Ces identifiants nécessitent des moyens de lecture adaptés, comme une unité d'interrogation à distance pour la puce RFID 20, ou une caméra pour le code barre 30. Comme mentionné précédemment, ces identifiants 20 et 30 sont fragiles, coûteux à installer, et peuvent subir de nombreux désagréments, voire des falsifications, au cours de la durée de vie d'une bouteille.

D'autres moyens de reconnaissance sont également disponibles, comme l'utilisation de couleurs caractéristiques normalisées peintes sur une partie 40 ou l'intégralité de la bouteille de gaz 1 et qui permettent de reconnaître le contenu théorique de la bouteille.

Compte tenu de la durée de vie des bouteilles de gaz, pouvant aller jusqu'à soixante ans, voire plus, ces dernières sont régulièrement testées sous forme de ré-épreuve consistant notamment à des tests de mise sous pression afin de s'assurer de la bonne tenue mécanique des bouteilles de gaz, ainsi que de leur intégrité. Après chaque ré-épreuve d'une bouteille de gaz, un signe distinctif 50, comme par exemple la date de la ré-épreuve ou tout autre poinço,n est gravé sur la bouteille de gaz.

Le numéro 10, la couleur normalisée 40, ainsi que le signe distinctif 50 correspondant à chaque ré-épreuve, sont les vrais fondements de la traçabilité d'une bouteille de gaz.

La figure 2 présente une vue schématique d'une installation permettant la mise en oeuvre du procédé de gestion selon l'invention. Dans cet exemple, deux bouteilles de gaz 1 et 2 sont destinées à être identifiées grâce au procédé de gestion selon l'invention. Elles présentent chacune les éléments d'identification listés précédemment, à savoir pour la bouteille 1 un numéro 10 une étiquette RFID 20, une zone peinte (ou de couleur) 40 ainsi qu'un signe distinctif 50, et pour la bouteille 2 un numéro 11, une étiquette RFID 21, une zone peinte 41, ainsi qu'un signe distinctif 51. Cette installation comprend également des moyens de prises de vue 60 permettant de prendre à distance une image d'une ou plusieurs bouteilles de gaz, cette image comprenant le numéro de la bouteille, l'étiquette RFID, la marque distinctive 50, et la zone peinte.

La gestion des bouteilles de gaz devant être assurée sur l'ensemble du parc, cette installation peut aussi bien se trouver dans un parc de conditionnement, dans le parc des distributeurs ou dans le parc des clients utilisateurs des bouteilles de gaz.

Les moyens de prise de vue 60 peuvent comprendre moyens de prise de vue unique ou une pluralité de tels moyens en fonction du nombre de bouteilles à identifier. Par exemple, lorsque les bouteilles sont mobiles sur un chariot, les moyens de prise de vue peuvent être uniques et saisir une image de chaque bouteille de gaz lorsqu'elles passent à proximité de ce moyen de prise de vue. Au contraire, lorsque les bouteilles sont simplement stockées ou immobiles, on peut prévoir plusieurs moyens de prise de vue, fixes ou mobiles, dont le déplacement dans ce dernier cas est télécommandé à distance par exemple. Les moyens de prise de vue doivent être placés de façon à ce que l'image obtenue de la bouteille permettent d'observer le numéro 10 de la bouteille 1, le signe distinctif 50, ainsi que la zone peinte à partir d'une couleur caractéristique normalisée 40. Les moyens de prise de vue doivent avant tout être apte à prendre les numéros 10 et 11 des bouteilles à identifier. Dans un mode de réalisation supplémentaire, et afin de disposer d'une information plus riche sur les bouteilles à identifier, les moyens de prises de vue doivent permettre de prendre une image de la bouteille afin de pouvoir identifier la couleur et le signe distinctif.

A cet effet, les moyens de prise de vue 60 doivent être aptes à prendre une image couleur de la bouteille. Une caméra optique couleur classique peut convenir comme moyens de prise de vue.

Dans un mode de réalisation supplémentaire, les moyens de prise de vue sont également aptes à lire le code barre 30 de la bouteille 1 (non représenté à la figure 2) ce qui permet lors de l'exploitation de l'information de comparer les informations données par le numéro, de signe distinctif 50, et la zone de couleur à l'information obtenue grâce au code barre 30. Dans un autre mode de réalisation préférée, les moyens de prise de vue peuvent également être associés à une unité d'interrogation à distance afin d'interroger la puce RFID 20 pour qu'elle envoie à cette unité d'interrogation distante les informations contenues dans la puce à savoir l'identifiant de la bouteille de gaz ainsi que d'autres informations éventuellement stockées dans la puce.

L'information obtenue par les moyens de prise de vue 60 est transmise vers un centre de contrôle du parc de bouteille de gaz 70. Cette transmission 65 peut être réalisée grâce à un réseau câblé conventionnel, ou par un réseau du type GPRS (general packet radio service) ou WIFI (wireless local area network). Ce centre de contrôle comprend une interface utilisateur 75 ainsi qu'une base de données contenant l'ensemble des données disponibles sur les bouteilles de gaz du parc.

Ce centre de contrôle peut comprendre des moyens informatiques ainsi que des moyens logiciels pour traiter l'information reçue grâce aux moyens de prise de vue. Ces moyens logiciels peuvent notamment comprendre un logiciel de reconnaissance de caractère pour déterminer le numéro imprimé ou gravé sur la bouteille à partir de l'image de ladite bouteille transmise par les moyens de prise de vue. Les moyens logiciels peuvent également identifier le signe distinctif (comme par exemple une date). Un logiciel de reconnaissance de couleur peut également être prévu pour identifier la couleur couvrant partiellement (zone 40) ou totalement la bouteille.

Ainsi à partir de l'image transmise et des moyens logiciels disponibles dans le centre de contrôle 70, on peut disposer pour chaque bouteille de son numéro, de sa couleur et du signe distinctif.

L'installation représentée à la figure 2 peut également transmettre toute une série d'informations supplémentaires en même temps que l'image d'une bouteille de gaz. Cette information peut notamment comprendre la date et l'heure à laquelle l'image est prise, le lieu où est localisée la bouteille, le type d'activité liée à ce lieu (remplissage de la bouteille, utilisation du gaz contenu dans ladite bouteille, réépreuve de la bouteille...) ainsi que toute autre information pertinente pour le suivi et la gestion du parc de bouteilles de gaz.

Le centre de contrôle 70 peut comprendre une base de données 80 contenant toutes les informations pertinentes quant à l'historique et le suivi des bouteilles de gaz. Cette base de données 80 comprend le numéro de chaque bouteille du parc, ainsi que les informations déjà transmises au préalable à chaque reconnaissance de la bouteille par exemple. Après identification du numéro d'une bouteille, et la comparaison de ce numéro à la base de données 80 contenant les numéros des bouteilles du parc, on peut accéder à toutes les données correspondant à cette bouteille dans la base de données 80.

Ces données peuvent comprendre le type de gaz qu'une bouteille reconnue est censée contenir (par exemple depuis la précédente vérification). En comparant la couleur peinte 40 sur la bouteille (reconnue grâce à l'image prise de ladite bouteille) au gaz contenu dans la bouteille selon la base de données 80, on peut exercer une action de détrompage, et vérifier qu'il n'y a pas eu erreur sur la nature du gaz rempli dans la bouteille.

Ces données peuvent également comprendre le ou les identifiants associés à l'étiquette RFID et/ou le code barre que porte chaque bouteille. La comparaison de l'information de la base de données liée au numéro de la bouteille (éventuellement complétée par le signe distinctif, ainsi que la couleur) à l'information liée à l'identifiant fourni par le code barre et/ou l'étiquette RFID, permet de mettre à jour les données concernant chaque bouteille de gaz. Compte tenu de la fiabilité liée au numéro de la bouteille, ce recoupement permet notamment de savoir si l'étiquette a été endommagée, changée, voir falsifiée, et ainsi mettre à jour la base de données concernant cette bouteille de gaz. La couleur fonction du contenu de la bouteille peut également être comparée au contenu de la base de données lié au numéro et/ou l'identifiant.

Le traitement de l'image envoyé par les moyens de prise de vue permet donc d'accéder à toute une série d'information caractéristique de la bouteille de gaz. L'image peut également être gardée dans la base de données 80 mise à jour, afin de pouvoir y faire référence à tout moment.

La méthode selon l'invention peut être mise en place sur un parc de bouteille pour lequel aucun procédé de traçabilité n'existe encore. Elle peut également venir compléter une méthode déjà existante, basée sur des puces électroniques et/ou l'utilisation de codes barres.

Les bouteilles peuvent contenir tout type de fluide stockable sous pression, comme l'hydrogène, l'oxygène, l'azote, de l'air ou un mélange à base de méthane.

## Revendications

1. Procédé de gestion d'un parc de bouteilles de gaz (1), chacune desdites bouteilles de gaz étant identifiée par un numéro (10, 11) imprimé ou gravé sur lesdites bouteilles, et comprenant les étapes de :
a) prise d'une image dudit numéro à partir de moyens de prise de vue (60),
b) transmission de ladite image vers un centre de contrôle (70) dudit parc de bouteilles de gaz,
c) détermination dudit numéro à partir de ladite image,
d) reconnaissance de la dite bouteille à partir dudit numéro.

2. Procédé de gestion selon la revendication 1, dans lequel l'étape c) comprend l'utilisation d'un logiciel de reconnaissance de caractères pour déterminer le numéro imprimé ou gravé sur la bouteille.

3. Procédé de gestion selon la revendication précédente, dans lequel à l'étape d) la reconnaissance comprend une étape de comparaison du numéro déterminé à une base de données (80) de numéros des bouteilles du parc.

4. Procédé de gestion selon l'une des revendications précédentes, dans lequel chaque bouteille de gaz est peinte, totalement ou partiellement, avec une ou plusieurs couleurs (40, 41) fonction du contenu de ladite bouteille, et **caractérisé en ce que**, à l'étape a) l'image est une image en couleur de ladite bouteille et qu'après l'étape c), ladite couleur est identifiée à partir de l'image.

5. Procédé de gestion selon l'une des revendications précédentes, dans lequel chaque bouteille comprend un signe distinctif (50) placé sur ladite bouteille après chaque réépreuve périodique réalisée, et **caractérisé en ce que**, à l'étape a) l'image comprend également ledit signe distinctif et qu'après l'étape c), ledit signe distinctif est identifié.

6. Procédé de gestion selon l'une des revendications précédentes, dans lequel les moyens de prise de vue comprennent un caméra optique couleur.

7. Procédé de gestion selon l'une des revendications précédentes, dans lequel un identifiant de type puce RFID (20) est prévue sur la bouteille, une unité d'interrogation à distance étant prévue pour interroger ladite puce RFID pour transmettre l'identifiant, ainsi que les autres informations contenues dans ladite puce.

8. Procédé de gestion selon l'une des revendications 1 à7, dans lequel un identifiant du type code barre (30) est prévue sur la bouteille, les moyens de prise de vue étant apte à lire ledit code barre.

9. Procédé de gestion selon l'une des revendications 7 ou 8, dans lequel l'information liée à l'identifiant dans la base de données est comparées à l'information liée au numéro dans ladite base de données.

10. Procédé de gestion selon l'une des revendications 4 à 9, dans lequel une ou plusieurs couleurs fonction du contenu de la bouteille sont comparées au contenu lié au numéro et/ou l'identifiant dans la base de données.

11. Procédé de gestion selon l'une des revendications 4 à 9, dans lequel la bouteille contient est un gaz comme l'hydrogène, l'oxygène, l'azote, de l'air ou un mélange à base de méthane.
